Europäisches Patentamt

European Patent Office

Office européen des brevets

(19)

(11) Publication number: **0 202 848 B1**

## EUROPEAN PATENT SPECIFICATION

(12)

(45) Date of publication of patent specification: **11.11.92**  (51) Int. Cl.⁵: **G06F  9/46**, G06F  9/42

(21) Application number: **86303631.5**

(22) Date of filing: **13.05.86**

(54) **High speed stack circuit for a data register in a microcomputer.**

(30) Priority: **17.05.85 JP 105572/85**

(43) Date of publication of application:
**26.11.86 Bulletin  86/48**

(45) Publication of the grant of the patent:
**11.11.92 Bulletin  92/46**

(84) Designated Contracting States:
**DE FR GB**

(56) References cited:
**US-A- 3 810 114**

**IBM TECHNICAL DISCLOSURE BULLETIN, vol.
24, no. 7B, December 1981, pages 3896-3897,
New York, US; A. BLUM: "Multiple general
purpose register sets embedded in proces-
sor chips"**

**Hochintegrierte Digitalschaltungen und
Mikroprozessoren", H. Bernstein, Plaum Ver-
lag, München, 1978,pages 239 und 339-343**

(73) Proprietor: **FUJITSU LIMITED
1015, Kamikodanaka Nakahara-ku
Kawasaki-shi Kanagawa 211(JP)**

(72) Inventor: **Yamada, Kenji
Minami-so, 98 Kosugigoten-cho 2-chome
Nakahara-ku Kawasaki-shi Kanagawa 211(JP)**

(74) Representative: **Skone James, Robert Edmund
et al
GILL JENNINGS & EVERY 53-64 Chancery
Lane
London WC2A 1HN(GB)**

# Description

This invention relates to a high speed stack circuit for a register in a one-chip microcomputer.

A microcomputer comprising a CPU (central processor unit), a ROM (read only memory), a RAM (random access memory), etc., on a single chip transfers data in each portion by using common bus lines. When an operation is performed by transferring data from the RAM to internal registers of the CPU, the process is carried out in accordance with an instruction previously stored in the ROM.

Such program can be latched as a routine formed usually by many instructions. In such a process, when a main routine is carried out in a set sequence, if an IRQ (interrupt request) is caused by an external source when the routine reaches a certain step, the process of the main routine must be discontinued at that step and the IRQ routine processed with priority. In this case, since the IRQ routine also utilises many registers, a stacking process is required. That is, the content of the registers, in the state of execution of a certain main routine, is saved to a region of the RAM instructed by a stack pointer, and subsequently, upon completion of the processing of the IRQ routine, processing of the main routine is resumed from an instruction following the certain instruction, and hence the saved content is restored in the previously-used registers.

If, as in the conventional stack system, an internal BUS is used, one cycle is required for each register transfer (it is assumed that the number of bits of the register is the same as the number of lines of the bus). This leads to a disadvantage in that the larger the number of registers, the more time is required for stacking. A similar situation occurs when it is returned from the IRQ routine by a return interrupt instruction (RTI).

To improve this situation, a system has been proposed in which registers exclusively used for the stack are procided internally in the CPU. In this system, since a data stack for the RAM is not necessary, high speed can be realised (stacking can be accomplished by one cycle). However, the registers exclusively used for the stack are dedicated hardware, and so cannot be used for storing and reading arbitrary data such as in a RAM, and accordingly cannot be used for another purpose. In particular, nesting is restricted by the capacity of the dedicated registers, and consequently for multistage nesting, multi-stage dedicated stack registers must be provided. This means that a large register capacity is required and, furthermore, since these registers are not always used, much of the capacity is wasted.

Hochintegrierte Digitalschaltungen und Mikroprozessoren, H. Bernstein, Pflaum Verlag, Munchen 1978, p 239, pp 339-343 describes a microprocessor comprising a CPU with a plurality of internal registers, a RAM, a data bus line provided between the CPU and RAM and a connecting part between the RAM and the internal registers of the CPU.

IBM Technical Disclosure Bulletin Vol 24 no. 7B, December 1981, New York, pp 3896-3897, A. Blum, details a processor chip which has multiple sets of general purpose registers in embedded arrays on the chip. These eliminate lengthy transfer operations of the general purpose registers contents to and from the main storage areas in multiprogramming task swiching.

An object of the present invention is to provide parallel processing of the stack.

The apparatus according to the invention is set out in claim 1.

Hence, when the data from the internal registers are stacked, one word line of the memory is selected and each bit of the data is transferred at the same time to a memory cell group connected to the word line through the extended bit line of the memory.

Embodiments of the invention will now be described, by way of example, with reference to the accompanying drawings, in which

Figs.1A, 1B and 1C are diagrams for explaining the operation of a conventional one-chip microcomputer;

Figs.2A and 2B are schematic diagrams showing features of a microcomputer according to the present invention;

Fig. 3 is a block diagram showing details of the diagrams of Figs. 2A and 2B;

Fig. 4 is a block diagram of one embodiment of the present invention;

Fig. 5 is a block diagram showing a CPU of Fig. 3 in detail;

Fig. 6 is a schematic diagram showing in detail a connecting portion between internal registers of a CPU and a RAM of Fig. 4;

Fig.7 is a flow chart for explaining the operation of stacking the register data; and

Fig. 8 is a block diagram of another embodiment of the present invention.

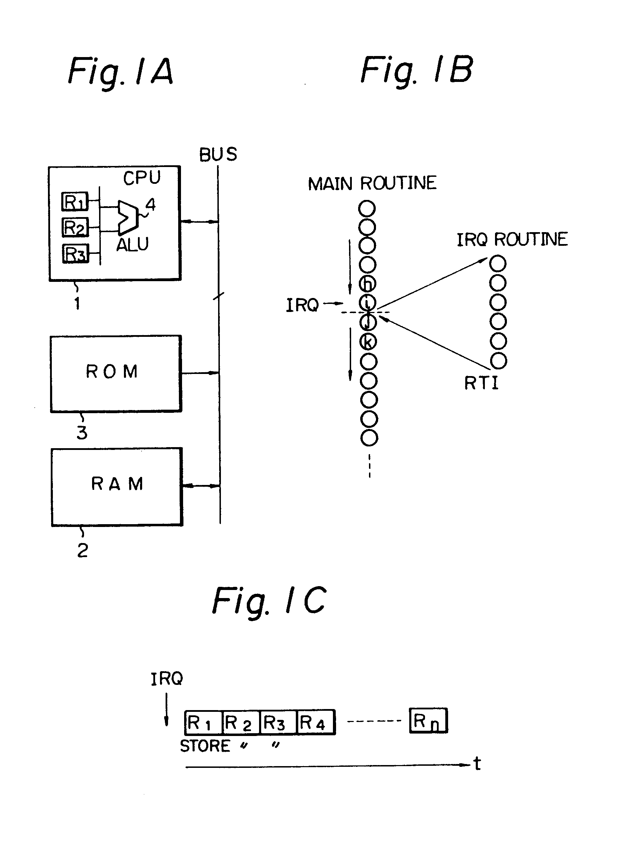

A microcomputer, which comprises a CPU (central processor unit), a ROM (read only memory), a RAM (random access memory), etc., mounted on a single chip, transfers the data in each portion by utilising a common bus line BUS, as shown in Fig. 1A. That is, when an operation is carried out by transferring data from a RAM 2 to internal registers $R_1$, $R_2$, ... of a CPU 1, the procedure is carried out by issuing an instruction previously stored in a ROM 3. For example, if the registers $R_1$, $R_2$ in the CPU 1 are defined as accumulators A, B, and an additional operation A + B is carried out in an arithmetic logic unit (ALU) 4 in the CPU, the program thereof will be substantially expressed as follows.

$M_1 \rightarrow A$        MOV
$M_2 \rightarrow B$        MOV
$A + B \rightarrow A$        ADD

The first step shows that the data in the RAM address $M_1$ is moved (MOV) to the accumulator A; the second step similarly shows that the data in the RAM address $M_2$ is moved to the accumulator B; and the third step shows that the contents of the accumulators A and B are added (ADD) and the result of the addition is written in the accumulator A.

Such a program can be latched as a routine, formed usually by many instructions. Now, as shown in Fig. 1B, when a main routine is carried out with a set sequence ...., h, i, j, k, ..., if an IRQ (interrupt request) is received from an external source when the sequence reaches the step i, the processing of the main routine must be discontinued at that step and the IRQ routine processed with priority. In this case, since the IRQ routine also utilises the registers $R_1$, $R_2$ ..., the stacking process is required as shown in the example of Fig. 1C. Namely, the content of the registers $R_1$, $R_2$, ..., in the state of executing the main routine up to the instruction i is saved to a region of the RAM instructed by a stack pointer, and upon completion of the processing of the IRQ routine, the processing of the main routine is resumed from the instruction following the instruction i, and the saved content can be returned to the registers $R_1$ $R_2$, ....

In the conventional stacking system, as already mentioned, the internal BUS is used for saving the content of the registers $R_1$, $R_2$ ..., and a certain time of one cycle is required for each register transfer (it is assumed that the number of bit positions in the register is the same as the number of lines of the bus). This brings a drawback in that the larger the number of registers, the greater is the time required for the stacking. Fig. 1C shows the stacking process of n internal registers $R_1$ - $R_n$ along a time axis t, and stacking of all register data is completed from the time at which an IRQ occurs at an nth cycle. A similar procedure occurs when it is returned from the IRQ routine by a return interrupt RTI.

In the present invention, parallel processing of the stack from the internal registers of the CPU to the RAM is performed by using bit lines extended from the RAM which provide a special route which is different from the common bus lines.

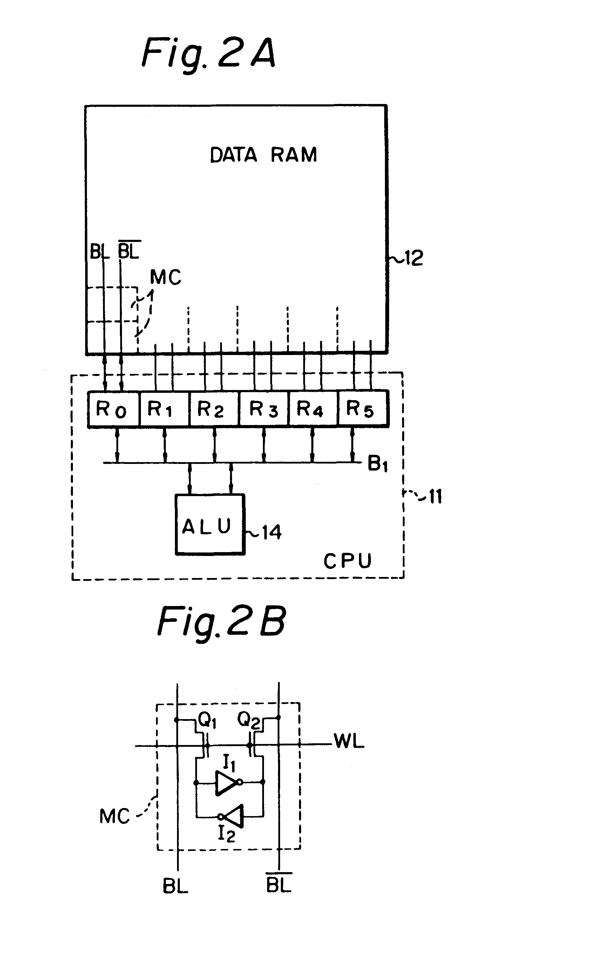

Figs. 2A and 2B are schematic diagrams of details of the present invention. Fig. 2A shows a relevant portion of a CPU 11 and a RAM 12, and Fig. 2B shows the construction of a memory cell in the CPU 11. In the drawing, BL and $\overline{BL}$ are a pair of bit lines, MC is, in this embodiment a static type memory cell, $R_0$, $R_1$, ... are internal registers in the CPU 11, 14 is an arithmetic logic unit (ALU), and WL is a word line. The memory cell MC is formed as a flip-flop type, in which inverters $I_1$ and $I_2$ are cross-connected. The cell is connected via transfer gates $Q_1$ and $Q_2$ to the bit lines BL and $\overline{BL}$, respectively. As shown in Fig. 2A, each bit position of the internal registers $R_0$, $R_1$ ... in the CPU 11 is directly connected (in detail, via a gate not shown in the drawing) to each pair of bit lines of the data RAM 12.

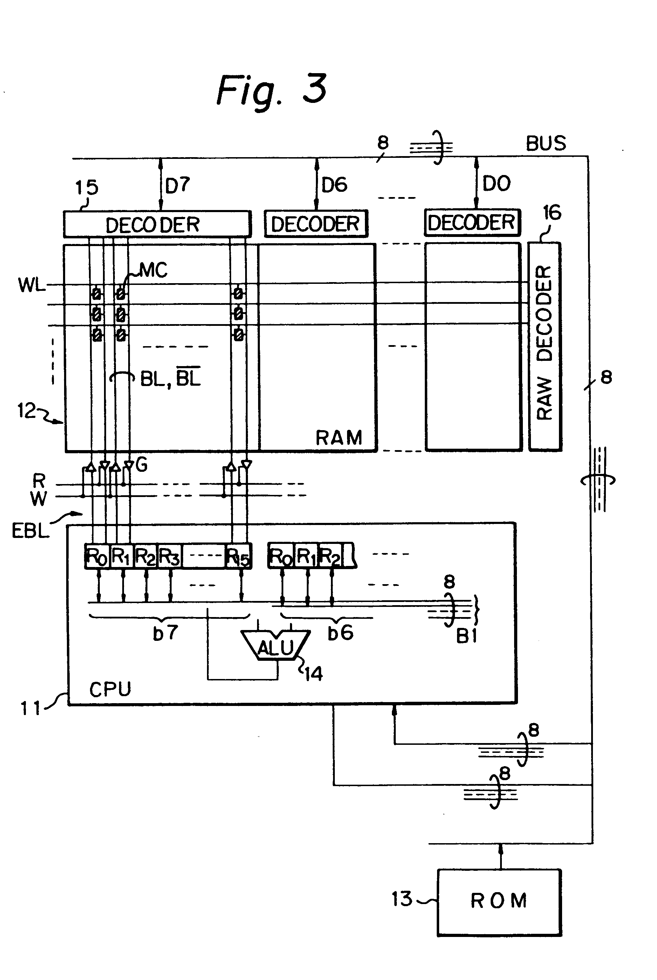

Fig. 3 is a diagram showing details of Fig. 2A. In this embodiment, a one-chip microcomputer is formed as an 8-bit type, and an eight-bit data bus (BUS) is connected between the RAM 12 and the CPU 11. The RAM 12 is divided into eight regions $D_0$ - $D_7$. Assuming that there are 128 pairs of hit lines BL, $\overline{BL}$, then there are 16 pairs of bit lines in each region. The 16 pairs of bit lines are connected, via a selection gate (not shown) and a decoder 15, to a data bus (BUS), and since the eight regions $D_0$ - $D_7$ are each formed as one bit, accordingly eight bits are formed in the former portion. In each region, a plurality of word lines WL run horizontally to a row decoder 16, these are crossed by a purality of bit lines in the vertical direction, and a memory cell MC is arranged at each cross point. Assuming that, in the present embodiment, one bit is provided for each pair of bit lines, then the sixteen 8-bit internal registers can be provided in the PCU 11. $R_0$, $R_1$ ..., $R_{15}$ denote these 16 registers in the CPU 11 or each bit thereof, and $b_7$, $b_6$, ... in the CPU 11 indicate an eighth bit, a seventh bit, ... of each register. $B_1$ indicates an internal bus in the CPU 11, eight of which buses are provided in this example. A connecting portion of the RAM 12 and a common bus BUS are the same as usually used but, in the present invention, in each pair of bit lines in the RAM, the ends opposite to the connecting portion are extended and connected via gates G to each bit position of the internal registers in the CPU 11. Therefore, the CPU 11 and the RAM 12 are adjacent to each other on the chip, as shown in Fig. 3.

Normal data transmission between the CPU 11 and the RAM 12 is carried out by using the bus line BUS. Gates and decoders controlled by the output of the decoder exist between the BUS and each data bit region of the RAM 12, and only selected 8-bit line pairs are connected to the eight-bit bus BUS, whereas the save and recapture of the data of the internal registers $R_0$, $R_1$, ..., $R_{15}$ are carried out directly via the extended portion EBL of the bit lines without going via the common bus BUS. For example, the data bits $b_7$, $b_6$, ... in the register $R_0$ are stored, via the extended portion EBL of the bit lines, in the regions $D_7$, $D_6$, ... of the RAM 12. This is the same for the other registers $R_1$, $R_2$, ..., and, therefore, all of the bits of the regions $D_7$ - $D_0$ of registers $R_0$ - $R_{15}$ are saved to the RAM 12 simultaneously. The stacked position is a memory cell group connected to a word line selected by a stack pointer. By this process, the data can be stacked in a small number of cycles regardless of the number of internal registers in the CPU 11, and is advantageous in that nesting can be made deep, in accordance with the number of the word lines of the RAM 12.

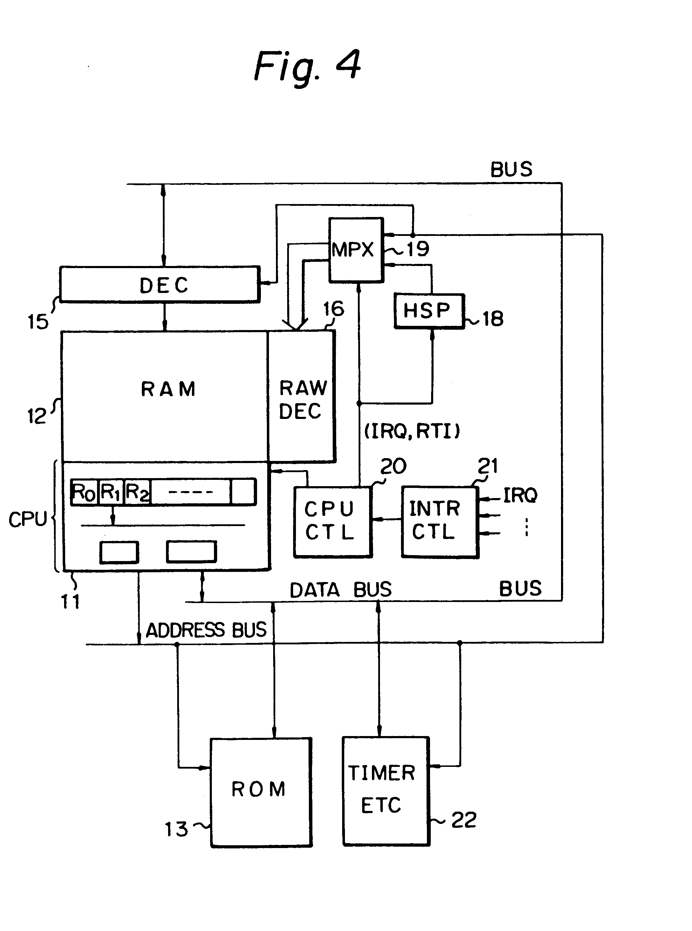

Fig. 4 is a schematic block diagram showing one embodiment of the present invention. In Fig. 4 the same items as in Fig. 3 are shown by the same reference numerals and symbols. A decoder (DEC) 16 selects a word line of the RAM 12, the input of the DEC being supplied from an address bus during a normal operation. However, during an interruption (IRQ) and a return interrupt instruction (RTI), the input for the DEC 16 is switched to the address from a hardware stack pointer (HSP) 18. A multiplexer (MPX) 19 is used for this purpose, and is controlled by the output of a CPU controller (CPU CTL) 20. An interrupt controlling portion (INTR CTL) 21 causes the CPU CTL 20 to operate when the interrupt IRQ is sensed. As usual, a timer 22, etc., is provided as a peripheral circuit.

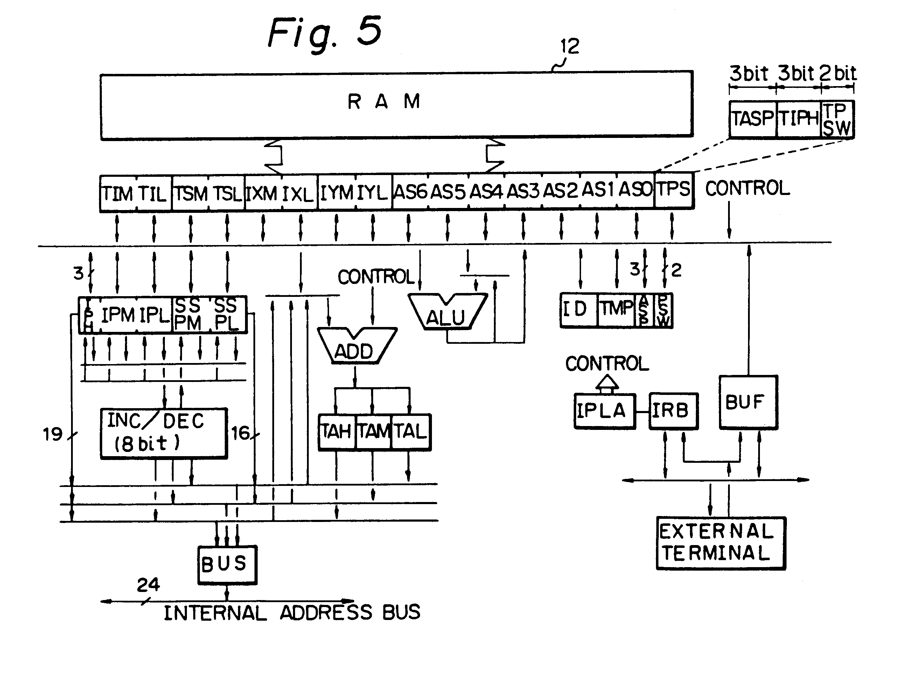

Fig. 5 is a detailed diagram of the CPU, wherein TIM - TPS are internal registers. Among these, AS0 - AS6 are accumulator stacks, IX and IY are index registers, and temporary-use registers are shown by the prefix T. H, L and M denote High, Low, and Medium registers, respectively. In addition to these internal registers, there are a program counter IP, a software stack pointer SSP and an increment/decrement circuit INC/DEC, and these units determine the position of an address to be interrupted. ADD is an adder for address calculation, ALU is an operator in the internal register, and PSW is a program status word.

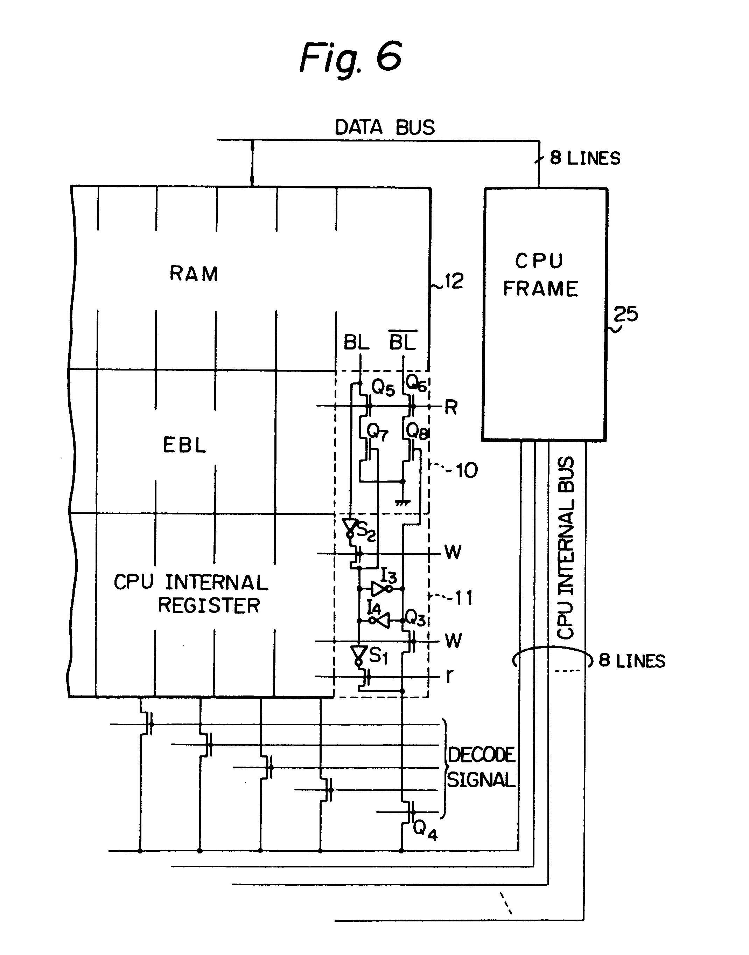

Fig. 6 is a detailed diagram of a connecting portion 10 between the internal register in the CPU 11 and the RAM 12, wherein inverters $I_3$, $I_4$ form one bit of the internal register. A gate $Q_3$ for write, and a gate $S_1$ for read, exist between this internal register and the internal bus of the CPU 11. The gate $Q_3$ is a transistor which turns ON when a write signal W is made high (H) at the time of a normal operation. On the other hand, the gate $S_1$ is an inverter type switch which turns ON when a read signal r is made H at the time of a normal operation. The signals W and r are fed out from a CPU frame 25. However, as the internal BUS in the CPU 11 is used in common by the registers $R_0$ - $R_{15}$, any register can be selcted by a transfer gate $Q_4$, ... Therefore, the decode signal for this process is also formed in the CPU frame 25. The diagram to this point shows a function which exists in a conventional one-chip microcomputer. However, in this embodiment, a connecting portion 10 formed by gates $Q_5$ - $Q_8$ and a switch $S_2$ are added thereto, so that the internal register in the CPU 11 can be directly connected to the RAM 12.

That is, the write command from the RAM 12 to the internal register in the CPU 11 (recapture of saved data) is carried out so that the inverter $S_2$ is turned ON by the write signal W, and an electric potential from one bit line BL is applied to a bit of the register, or more precisely, in this embodiment, to the input of the inverter $I_3$. At this time, in the RAM 12 the word line WL selected at the time of the interruption is again selected, and a potential difference H, L is supplied to the pair of bit lines BL, $\overline{BL}$ according to the information from a memory cell connected to the word line. Therefore, by adding the potential of the bit line BL to the bit from the register via the inverter switch $S_2$, the bit flip-flop is set or reset, so that the recapture of the saved data is carried out. Conversely, when the data is transferred (saved) from the internal register in the CPU 11 to the RAM 12, the gates $Q_5$ and $Q_6$ are turned ON by a signal R, and the switches $Q_7$ and $Q_8$ are driven by the complementary output of the bits $I_3$ and $I_4$ of the register. For example, the output of $I_3$ is H and the output of $I_4$ is L, the transistor $Q_8$ turns ON and the transistor $Q_7$ turns OFF. Then, the bit line $\overline{BL}$ becomes L, BL become H, and, in the cell MC in Fig. 2B, the output of the inverter $I_2$ becomes H and the output of $I_1$ becomes L. Thus, the content of the registers $I_3$, $I_4$ is saved to the RAM 12. As already mentioned, the position to be saved is selected by the word line WL. The signals R and W at the time of the save are also formed in the CPU 11, and the word line to be selected is determined by the stack pointer. The inverter $S_2$ has the function of a sense amplifier and the switches $Q_7$ and $Q_8$ have the function of a write amplifier.

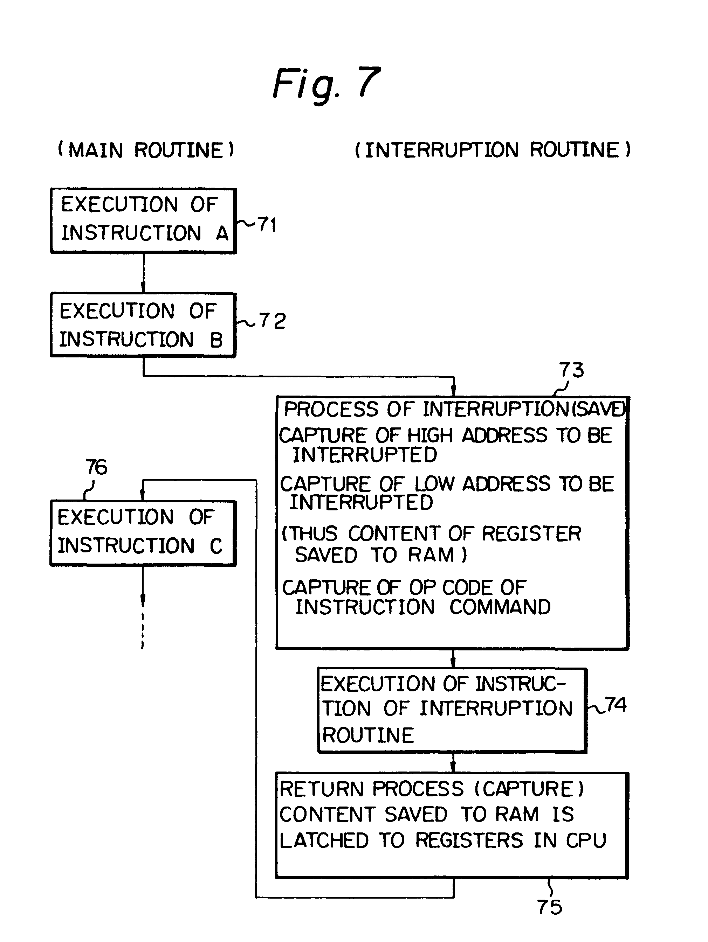

It is not necessary to cause a special speeding up of the direct transmission between the RAM 12 and the internal register in the CPU 11, because a time margin, usually about 3 cycles, exists from the time of the interruption to the time when the stack is completed. For example, consider the execution of an instruction A as shown in a block 71 of Fig. 7 and then the execution of the next instruction B as shown in a block 72. If the interruption occurs while the instruction B is being executed as shown in a block 73 of Fig. 7, it is necessary to then latch H and L in the address to be interrupted and, subsequently, to latch the OP code of the next instruction as shown in the block 73. This requires about three cycles, and the save may be carried out during this time. Next, the instructions of the interruption routine are executed as shown in a block 74. After that, the saved data is latched to the registers in the CPU as shown in a block 75, and an instruction C is effected as shown in a block 76.

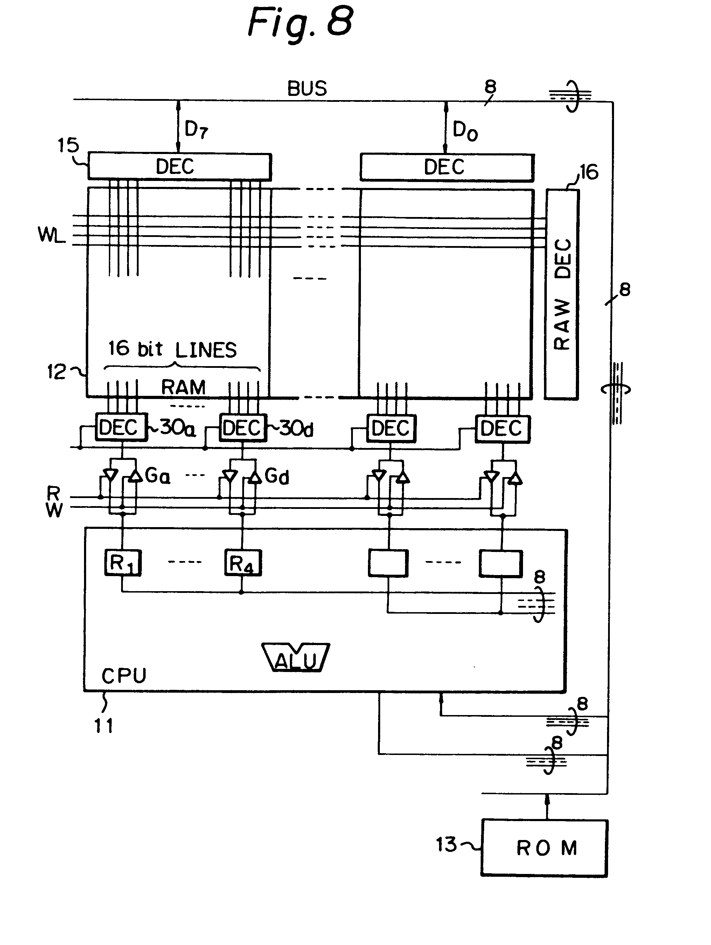

Fig. 8 shows another embodiment of the present invention. The basic idea of that embodiment is similar to that shown in Fig. 3. The difference between those embodiments is that in Fig. 8 four decoders 30a - 30d are provided for 16 bit lines, and the decoded outputs of the decoders 30a - 30d are supplied, via four pairs of gates Ga - Gd, to four internal registers $R_1$ - $R_4$. The decoders are controlled by the hardware stack pointer shown in Fig. 3. The embodiment shown in Fig. 8 is effective when the number of internal registers in the CPU 11 is small, and the region of the RAM 12 can be effectively used.

As mentioned above, in the present invention the data in the internal registers in the CPU can be saved to the RAM by using the bit lines, so that the advantage of transferring to the interruption routine in a small number of cycles and of returning from the routine can be obtained. Furthermore, a residual region of the RAM can be used for the stack, and nesting can therefore be arbitrarily carried out without taking into consideration the capacity of the register for stacking.

## Claims

1. A microcomputer having a central processing unit (11) and a random access memory (12); a plurality of internal registers ($R_0$, $R_1$, ...) in the central processing unit; a data bus line (BUS), provided between the random access memory and the central processing unit, for transferring data therebetween; and a connection portion (10), provided between the random access memory and said internal registers, for transferring a plurality of data therebetween characterised in that the microcomputer is provided on a single chip; in that the connection portion is provided between the specially extended bit lines (BL,$\overline{BL}$) of the memory cells of the random access memory (12) and the respective bit positions of said registers thus bypassing the column decoder (15); and in that the number of memory cells in each word line of the random access memory (12) is at least equal to the overall number of bits in said internal registers allowing the simultaneous transfer of data between all said internal registers and the memeory cells connected to a selected word line of the random access memory without using the data bus line (BUS).

2. A microcomputer according to claim 1, characterized in that the connecting portion (10) comprises a pair of a write gate ($Q_3$) and a

read gate ($S_1$) for every bit line (BL,$\overline{BL}$) of the memory (12), one end of the pair being connected to the bit line of the memory, another end of the pair being connected to each of the internal registers having the same number of the bit lines, and the write gate and the read gate being controlled by a write signal (W) and a read signal (r), respectively.

3. A microcomputer according to claim 1, characterised in that the connecting portion (10) comprises a decoder (30a-30d) for n bit lines of the memory, the decoder having inputs connected to the n bit lines of the memory; a respective pair of gates (Ga-Gd) comprising a write gate and a read gate for each output of each decoder, one end of the pair being connected to the output of the decoder, and the other end of the pair being connected to each of the internal registers ($R_1$-$R_4$) having one-n'th the number of the bit lines, the write gate and the read gate being controlled by a write signal (W) and a read signal (R), respectively.

4. A microcomputer according to claim 2 or claim 3, characterised in that each pair of gates comprising a write gate and a read gate comprises a first transistor ($Q_5$) and a second transistor ($Q_7$) connected in series between a first bit line (BL) and ground, a third transistor ($Q_6$) and a fourth transistor ($Q_8$) connected in series between a second bit line ($\overline{BL}$) and ground, an inverter ($S_2$) connected between the first bit line (BL) and one terminal of the internal register in the CPU; in that gates of the second and fourth transistors are connected to one terminal and an opposite terminal of the internal register in the CPU (11); in that when data is transferred from the RAM (12) to the CPU, the inverter is turned on so as to apply the potential of the first bit line (BL) to the register; and in that when data is saved from the CPU to the RAM, the first and third transistors are turned on and complemental outputs of the registers are supplied to the gates of the second and fourth transistors.

## Patentansprüche

1. Ein Mikrorechner mit einer zentralen Prozessoreinheit (11) und einem Speicher mit wahlfreiem Zugriff (12), einer Vielzahl von internen Registern ($R_0$, $R_1$, ...) in der zentralen Prozessoreinheit, einer zwischen dem Speicher mit wahlfreiem Zugriff und der zentralen Prozessoreinheit vorgesehenenen Datenbusleitung (BUS) für die Übertragung von Daten dazwischen und einem zwischen dem Speicher mit wahlfreiem Zugriff und vorerwähnten internen Registern vorgesehenen Verbindungsteil (10) für die Übertragung einer Vielzahl von Daten dazwischen, dadurch gekennzeichnet, daß der Mikrorechner auf einem Einzelchip vorgesehen ist, daß das Verbindungsteil zwischen den speziell verlängerten Bitleitungen (BL, $\overline{BL}$) der Speicherzellen des Speichers mit wahlfreiem Zugriff (12) und den jeweiligen Bitpositionen der vorerwähnten Register vorgesehen ist und auf diese Weise den Spaltendecoder (15) umgeht und daß die Zahl der Speicherzellen in jeder Wortleitung des Speichers mit wahlfreiem Zugriff (12) zumindest gleich der Gesamtzahl der Bits in vorerwähnten internen Registern ist, wodurch die gleichzeitige Übertragung von Daten zwischen allen vorerwähnten internen Registern und den mit einer ausgewählten Wortleitung des Speichers mit wahlfreiem Zugriff verbundenen Speicherzellen ermöglicht wird, ohne die Datenbusleitung (BUS) zu verwenden.

2. Ein Mikrorechner nach Anspruch 1, dadurch gekennzeichnet, daß das Verbindungsteil (10) ein Paar eines Schreibgates ($Q_3$) und eines Lesegates ($S_1$) für jede Bitleitung (BL, $\overline{BL}$) des Speichers (12) umfaßt, wobei ein Ende des Paares mit der Bitleitung des Speichers verbunden ist und das andere Ende des Paares mit jedem der internen Register, das dieselbe Zahl der Bitleitungen hat, und wobei das Schreibgate und das Lesegate durch ein Schreibsignal (W) bzw. ein Lesesignal (r) gesteuert werden.

3. Ein Mikrorechner nach Anspruch 1, dadurch gekennzeichnet, daß das Verbindungsteil (10) einen Decoder (30a - 30 d) für n Bitleitungen des Speichers umfaßt, wobei der Decoder Eingänge hat, die mit den n Bitleitungen des Speichers verbunden sind, ein respektives Paar der Gates (Ga - Gd) mit einem Schreibgate und einem Lesegate für jeden Ausgang eines jeden Decoders, wobei ein Ende des Paares mit dem Ausgang des Decoders verbunden ist und das andere Ende des Paares mit jedem der internen Register ($R_1$ - $R_4$), die ein n-tel der Zahl der Bitleitungen haben, wobei das Schreibgate und das Lesegate durch ein Schreibsignal (W) bzw. ein Lesesignal (R) gesteuert werden.

4. Ein Mikrorechner nach Anspruch 2 oder Anspruch 3, dadurch gekennzeichnet, daß jedes Paar von Gates, das ein Schreibgate und ein Lesegate umfaßt, einen ersten Transistor ($Q_5$) und einen zweiten Transistor ($Q_7$) umfaßt, die

in Reihe zwischen einer ersten Bitleitung (BL) und Erde geschaltet sind, einen dritten Transistor ($Q_6$) und einen vierten Transistor ($Q_8$), die in Reihe zwischen einer zweiten Bitleitung ($\overline{BL}$) und Erde geschaltet sind, einen Inverter ($S_2$), verbunden zwischen der ersten Bitleitung (BL) und einem Anschluß des internen Registers in der CPU; dadurch gekennzeichnet, daß die Gates des zweiten und vierten Transistors mit einem Anschluß und einem entgegengesetzten Anschluß des internen Registers in der CPU (11) verbunden sind, daß bei der Übertragung von Daten aus dem RAM (12) zur CPU der Inverter eingeschaltet ist, so daß das Potential der ersten Bitleitung (BL) dem Register zugeführt wird, und daß bei der Sicherung von Daten aus der CPU zum RAM der erste und dritte Transistor eingeschaltet sind und die komplementären Ausgaben der Register den Gates des zweiten und vierten Transistors zugeführt werden.

**Revendications**

1. Micro-ordinateur comportant une unité centrale de traitement (11) et une mémoire à accès sélectif (12); une pluralité de registres internes ($R_0$,$R_1$,...) dans l'unité centrale de traitement; une ligne de bus de données (BUS), prévue entre la mémoire à accès sélectif et l'unité centrale de traitement, pour transférer des données entre celles-ci; et une partie de connexion(10), prévue entre la mémoire à accès sélectif et lesdits registres internes, pour transférer une pluralité de données entre ceux-ci, caractérisé en ce que le microordinateur est prévu sur une seule puce; en ce que la partie de connexion est prévue entre les fils de bit spécialement étendus (BL,$\overline{BL}$) des cellules de mémoire de la mémoire à accès sélectif (12) et les positions de bit respectives desdits registres en contournant ainsi le décodeur de colonne (15); et en ce que le nombre de cellules de mémoire sur chaque fil de mot de la mémoire à accès sélectif (12) est au moins égal au nombre total de bits dans lesdits registres internes en permettant le transfert simultané de données entre tous les dits registres internes et les cellules de mémoire connectées à un fil de mot sélectionné de la mémoire à accès sélectif sans utiliser la ligne de bus de données (BUS).

2. Micro-ordinateur selon la revendication 1, caractérisé en ce que la partie de connexion (10) comprend une paire constituée d'une porte d'écriture ($Q_3$) et d'une porte de lecture ($S_1$) pour chaque fil de bit (BL,$\overline{BL}$) de la mémoire (12), une extrémité de la paire étant connectée au fil de bit de la mémoire, l'autre extrémité de la paire étant connectée à chacun des registres internes ayant le même nombre des fils de bit, et la porte d'écriture et la porte de lecture étant commandées par un signal d'écriture (W) et un signal de lecture (r), respectivement.

3. Micro-ordinateur selon la revendication 1, caractérisé en ce que la partie de connexion (10) comprend un décodeur (30a-30d) pour n fils de bit de la mémoire, le décodeur ayant des entrées connectées aux n fils de bit de la mémoire; une paire respective de portes (Ga-Gd) comprenant une porte d'écriture et une porte de lecture pour chaque sortie de chaque décodeur, une extrémité de la paire étant connectée à la sortie du décodeur, et l'autre extrémité de la paire étant connectée à chacun des registres internes ($R_1$-$R_4$) comportant un-n$^{\text{ième}}$ du nombre de fils de bit, la porte d'écriture et la porte de lecture étant respectivement commandées par un signal d'écriture (W) et un signal de lecture (R).

4. Micro-ordinateur selon l'une quelconque des revendications 2 et 3, caractérisé en ce que chaque paire de portes comprenant une porte d'écriture et une porte de lecture comprend un premier transistor ($Q_5$) et un deuxième transistor ($Q_7$) connectés en série entre un premier fil de bit (BL) et la masse, un troisième transistor ($Q_6$) et un quatrième transistor ($Q_8$) connectés en série entre un second fil de bit ($\overline{BL}$) et la masse, un inverseur ($S_2$) connecté entre le premier fil de bit (BL) et une borne du registre interne de l'unité CPU; en ce que les grilles des deuxième et quatrième transistors sont connectées à une borne et une borne opposée du registre interne de l'unité CPU (11); en ce que, lorsque des données sont transférées de la mémoire RAM (12) à l'unité CRU, l'inverseur est rendu conducteur de manière à appliquer le potentiel du premier fil de bit (BL) au registre; et en ce que, lorsque des données sont sauvegardées de l'unité CPU dans la mémoire RAM, les premier et troisième transistors sont rendus conducteurs et des signaux de sortie complémentaires des registres sont fournis aux grilles des deuxième et quatrième transistors.

# Fig. IA

# Fig. IB

BUS

CPU

R1

R2

4

ALU

R3

1

ROM

3

RAM

2

MAIN ROUTINE

IRQ ROUTINE

IRQ →

RTI

# Fig. IC

IRQ

R₁ R₂ R₃ R₄ ----- R_n

STORE " "

t

# Fig. 2A

# Fig. 2B

Fig. 3

# Fig. 4

# Fig. 5

EP 0 202 848 B1

# Fig. 6

# Fig. 7

(MAIN ROUTINE)        (INTERRUPTION ROUTINE)

```
┌─────────────────┐
│  EXECUTION  OF  │
│  INSTRUCTION  A │~71
└─────────────────┘
         │
         ▼
┌─────────────────┐
│  EXECUTION  OF  │
│  INSTRUCTION  B │~72
└─────────────────┘
```

73

┌──────────────────────────────────────┐
│ PROCESS OF INTERRUPTION (SAVE)        │
│ CAPTURE OF HIGH ADDRESS TO BE         │
│   INTERRUPTED                         │
│                                       │
│ CAPTURE OF LOW ADDRESS TO BE          │
│   INTERRUPTED                         │
│                                       │
│ (THUS CONTENT OF REGISTER             │
│   SAVED TO RAM)                       │
│                                       │
│ CAPTURE OF OP CODE OF                 │
│   INSTRUCTION  COMMAND                │
└──────────────────────────────────────┘

76

┌─────────────────┐
│  EXECUTION  OF  │
│  INSTRUCTION  C │
└─────────────────┘

┌──────────────────────────────┐
│ EXECUTION OF INSTRUC-         │
│ TION OF INTERRUPTION          │~74
│ ROUTINE                       │
└──────────────────────────────┘

┌──────────────────────────────┐
│ RETURN PROCESS (CAPTURE)      │
│ CONTENT SAVED TO RAM IS       │
│ LATCHED TO REGISTERS IN CPU   │
└──────────────────────────────┘

75

# Fig. 8